# EUROPEAN PATENT APPLICATION

(11) **EP 4 586 583 A1**
(43) Date of publication of application: **16.07.2025**
(21) Application number: 25151240.6
(22) Date of filing: 10.01.2025
(51) Int. Cl.: H04L 47/22, H04L 47/2416, H04L 47/28, H04L 47/32, H04L 49/201, H04L 49/00, H04L 49/90

(54) **FAIR DATA PACKET DELIVERY ON COMPUTING PLATFORMS**

(30) Priority: 12.01.2024 US 202463620378 P; 09.01.2025 US 202519015207
(71) Applicant: Google LLC, Mountain View, CA 94043 (US)
(72) Inventor: LI, Yuliang, Mountain View, CA 94043 (US); GONG, Junzhi, Mountain View, CA 94043 (US); DUKKIPATI, Nandita, Mountain View, CA 94043 (US); YAP, Kok-kiong, Mountain View, CA 94043 (US); RAY, Devdeep, Seattle, WA 98101 (US); WASSEL, Hassan Mohamed Gamal Hassan, Mountain View, CA 94043 (US)
(74) Representative: Betten & Resch

(57) **Abstract**

Methods, systems, and apparatus are provided for fair data packet delivery. In some applications, such as financial exchanges, online gaming, and consensus protocols, having data received by each receiver at or near the same time can be just as important, if not more important, than achieving minimal latency. A system as described herein implements a hold- and-release of data packets on network interface controllers to ensure data packets are delivered to multiple receivers within tens of nanoseconds of one another. The system described can be implemented on a variety of different network devices with different built-in traffic shaping functionality. The hold and release is achieved by precise clocks in hardware, synchronized to deliver packets in a manner that reduces latency variation introduced in other end-to-end packet delivery systems. A fair data packet delivery system is achieved without relying on either software and its associated jitter, or system-specific notions of fairness.

## Description

### CROSS REFERENCE TO RELATED APPLICATIONS

The present application claims the benefit of the filing date of U.S. Provisional Patent Application No. 63/620,378, filed January 12, 2024, the disclosure of which is hereby incorporated herein by reference.

### BACKGROUND

Data packet delivery systems exchange data between senders and recipients. Reduced latency or faster transmission speeds are beneficial for any packet delivery system, however, some systems, such as, for example, financial exchanges, consensus protocols, or online gaming, have additional requirements calling for transmission of packets in a fair manner to all recipients. A fair data packet delivery system can deliver packets of data from a sender to multiple recipients, such that each recipient receives the packets at the same time, or within a small threshold.

Current fair data packet delivery systems experience different sources of delay variance that prevent packets from being delivered in a consistently fair manner. One reason for this shortcoming is in the variation of delays introduced in nonidentical and dynamic pathing for packets sent from a sender to multiple receivers. Example sources of delay variance include the use of different hardware along the journey of each packet to a respective receiver, and queuing delays, which affect receivers differently. Fair data packet delivery systems implemented in software use different software clocks across a network, which can become unsynchronized. Packet I/O software libraries, software queues at network gateways, or drivers introduce delay variance and performance jitters that also change the actual arrival time for data packets to different receivers.

Network interface controllers (NICs) are devices for sending and receiving data over a network. NICs can receive data from a device or network of devices. Some NICs are configured for pacing or rate limiting packets that egress from the NICs. This pacing or rate limiting at packet egress for a NIC reduces traffic congestion for a network.

### BRIEF SUMMARY

Aspects of the disclosure provide fair data packet delivery on a computing platform. In some applications, such as financial exchanges, online gaming, and consensus protocols, having data received by each receiver at or near the same time can be just as important, if not more important, than achieving minimal latency. A system as described herein implements a hold-and-release of data packets using network interface controllers (NICs) to enable the multicasted data packets to be delivered to multiple receivers within tens of nanoseconds of one another. As examples of multicasting, data can be sent from a sender that is duplicated by an intermediate device, such as a switch, before being sent out to each NIC. Data can also be sent by the sender generating multiple copies of the packet, one for each receiver. Data is received by a NIC, held until a predetermined release time is met, and then released at that time to a receiver associated with the NIC.

One example numerical measure of fairness is the difference between the maximum and minimum packet arrival time for receivers of a multicast data packet. Fairness may be measured in other ways, depending on, for example, the requirements for a specific application. For fair data packet delivery systems, the max-min difference should be tens of nanoseconds, if not lower, to support applications with strict fairness requirements, such as financial exchanges. Fairness can also be measured in terms of probability, e.g., the probability that the max-min difference for packet arrival times across multiple receivers is within tens of nanoseconds. Strict fairness requirements can require high probability, e.g., 99.9%, that the max-min difference is within tens of nanoseconds.

Systems described herein can be implemented on a variety of different network devices with different built-in traffic shaping functionalities. The hold-and-release is achieved in-part by precise clocks in hardware, synchronized to allow NICs to deliver packets in a manner that reduces delay variance. Delay variance is the difference in delay between different packets from a source to a destination. As described herein, there are different sources of delay variance, which are reduced or eliminated according to aspects of the disclosure.

Aspects of the disclosure provide for hold-and-release functionality implemented at NIC packet ingress, *e.g*., when the NIC receives a packet, as opposed to when the NIC transmits a packet. In some examples, NICs with traffic shaping in a packet egress pipeline can be modified or configured to perform a hold-and-release of network data packets, before looping packets back to the NIC ingress, either entirely within the NIC or through a switch coupling the NIC to a receiver.

Aspects of the disclosure provide for at least the following technical advantages. A fair data packet delivery system is achieved without relying on either software and its associated jitter, or system-specific notions of fairness. Packets can be delivered fairly and consistently, without substantial trade-offs in overall latency or imposing burdensome hardware requirements.

Hardware traffic shaping can be leveraged for releasing packets at a given time with nanosecond-level accuracy, eliminating delay variations, for example introduced by software packet processing jitters. The different approaches described herein, e.g., ingress hold-and-release, egress hold-and-release with local or switch loopback, along with different examples for implementing hold-and-release on different types of NICs, contribute to the implementation flexibility of the systems described. This flexibility enables fair data packet delivery systems to be implemented on existing computing platforms, rather than requiring complex custom hardware and infrastructure. Further, interfaces for interacting with the system described herein for senders does not impose restrictions on the locations or dedicated link paths connecting the senders to the system.

Placing the network devices holding-and-releasing data packets for data packets locally, e.g., within a NIC coupled to a receiver through a board interconnect, or within a rack with equal-length cables, also reduces the variance in delay for the different packets. In contrast, approaches relying on software gateways are unable to utilize high-precision packet release and clock synchronization performance achieved by the network devices in hardware. Gateways are also implemented on devices further away from receivers, introducing delay variance as between the different released packets.

A fair data packet delivery system as described herein can be implemented on a computing platform, allowing fair data packet delivery to be more readily available across more applications. The system as described reduces or eliminates the high cost from customized hardware/infrastructure, *e.g*., equal length cables across multiple network layers. These approaches also require significant hardware expertise to implement and are prone to error or outright failure.

According to aspects of the disclosure, there are provided methods, systems, and apparatus for fair data packet delivery. In some applications, e.g. time critical applications, such as financial exchanges, online gaming, and consensus protocols, having data received by each receiver at or near the same time can be just as important, if not more important, than achieving minimal latency. A system as described herein implements a hold-and-release of data packets on network interface controllers to ensure data packets are delivered to multiple receivers within tens of nanoseconds of one another. The system described can be implemented on a variety of different network devices with different built-in traffic shaping functionality. The hold and release is achieved by precise clocks in hardware, synchronized to deliver packets in a manner that reduces latency variation introduced in other end-to-end packet delivery systems. A fair data packet delivery system is achieved without relying on either software and its associated jitter, or system-specific notions of fairness.

### BRIEF DESCRIPTION OF THE DRAWINGS

FIG. 1 is a block diagram of a fair data packet delivery system in communication with a sender and receivers, according to aspects of the disclosure.
FIG. 2 is a block diagram of a NIC with a hold and release engine in an ingress pipeline of the NIC, according to aspects of the disclosure.
FIG. 3 is a block diagram of a fair data packet delivery system with switches, according to aspects of the disclosure.
FIG. 4 is a block diagram of a NIC with a hold and release engine in an egress pipeline of the NIC, according to aspects of the disclosure.
FIG. 5A is a block diagram of a configuration of a NIC for hold and release with loopback through a top of rack (ToR) switch and a receiver, according to aspects of the disclosure.
FIG. 5B is a block diagram of another configuration of a NIC for hold and release with loopback through a ToR switch and a receiver, according to aspects of the disclosure.
FIG. 6 is a flow diagram of an example process for fair data packet delivery, according to aspects of the disclosure.
FIG. 7 is a flow diagram of an example process for fair data packet delivery at an egress pipeline for a NIC, with loopback, according to aspects of the disclosure.
FIG. 8 is a block diagram of an example computing environment configured to implement a fair data packet delivery system, according to aspects of the disclosure.

### DETAILED DESCRIPTION

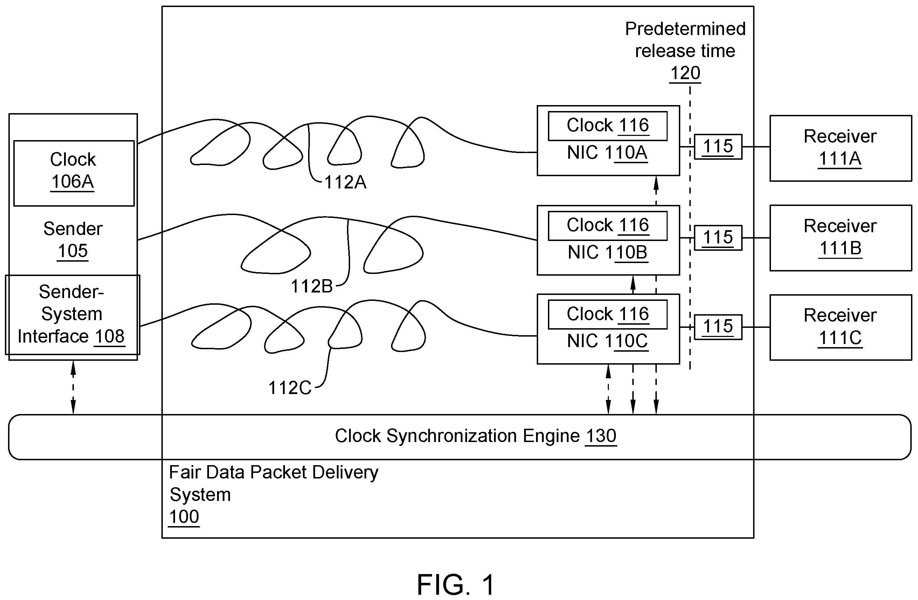

FIG. 1 is a block diagram of a fair data packet delivery system 100 in communication with a sender 105 and receivers 111A-C, according to aspects of the disclosure. As shown in FIG. 1, the system includes NICs 110A-110C and clock synchronization engine 130.

Sender 105 is configured to multicast packets to the receivers 111A-111C, through the system 100. The sender 105 can send multiple copies of a data packet 115, e.g., multicast the data packet 115, to the NICs 110A-110C. The sender 105 includes a clock 106A, which the clock synchronization engine 130 synchronizes to match the time indicated by clocks 106A-106C of NICs 110A-110C. The sender 105 can be an application, virtual machine, a device, a network of devices, a processor, or any other combination of firmware, software, and/or hardware configured to perform the operations described herein.

The sender 105 need not form part of the system 100 and can implement sender-system interface 108 for interacting with the system 100 as described herein. Using the interface 108, *e.g*., an API, a software program, etc., the sender 105 can send data packets tagged with a predetermined release time 120, as well as receive signals from the clock synchronization engine 130. Predetermined release time 120 is the time at which data packet 115 is to be released by the NICs 110A-110C. The predetermined release time 120 can be indicated, for example, by the sender interface 108 tagging the data packet in metadata. The sender-system interface 108 can calculate the predetermined release time using a predetermined delay value, *e.g*., 1 microsecond to 400 microseconds.

In some examples, the predetermined release time 120 can be an offset, or window of time at which data is to be released. For example, the NICs 1 10A-1 10C may hold and release data packets in two microsecond intervals. The length between release times can vary from implementation-to-implementation, for example based on the requirements of the overarching platform using the system 100 for providing some service in which fair data packet delivery is used. In some examples, the NICs 110A-110C calculate the next release time, based on the delivery time stamp of the data packet 115 and the predetermined release time 120 or a predetermined delay value. The hardware implementation of fair data packet delivery as described herein avoids latency variations introduced, e.g., in software-based approaches, delay variation introduced by packets taking paths through different links and switches of a network, and/or by queuing delay on a switch or other data processing device. Senders implementing multicast delivery are susceptible to latency variations introduced during the multicast itself, for example because the sender might send copies of a packet one at a time, resulting in each copy being released at different times. The system 100 reduces hardware requirements for the sender 105, for example by allowing the sender 105 to send packets one at a time, without introducing delay variance.

In some examples, the sender 105 may send each packet copy at different and potentially irregular intervals, for example with one packet sent at time = 0.01, the next packet sent at time = 0.02, following packets sent at time = 0.05, 0.06, 0.08, and so on. In this example, the predetermined delay value may be 1, e.g., greater than the time difference between sending the first packet and sending the last packet by the sender 105, meaning that, even though the sender 105 sends the packets at different intervals, according to aspects of the disclosure, all the packets will be held and released to their respective receivers at time = 1.

In some examples, the sender 105 can specify, and/or the NICs 110A-N can receive, predetermined release times that are irregularly spaced for multiple multicasts. For example, sender 105 can send five multicasts, each multicast including copies of a respective data packet intended for receivers 111A-C. The sender 105 can send, along with each packet, a predetermined release time corresponding to intended release of the multicast the packet is a part of. For example, the sender 105 can specify a first multicast to be released by the NICs 110A-C at time = 1, a second multicast to be released at time = 1.1, and subsequent multicasts to be released at times = 1.5, 1.7, and 2.0. The NICs 110A-C receive and parse the packets from the different multicasts, and determine the appropriate release times, e.g., at times 1.0, 1.1, 1.5, 1.7, and 2.0, respectively.

As another example, instead of receiving the predetermined release times, the NICs 110A-110C can receive a predetermined delay value, *e.g*., time delay = 1, and add the time delay to the transmission time stamp of each packet received at the NICs 110A-110C, across the example multicasts, to determine the correct release time for each packet. For example, packets for the five multicasts discussed by way of example can have time stamps at time = 0 (*e.g*., the time at which first multicast is sent), 0.1, 0.5, 0.7, and 1.0, respectively. Assuming in this example a predetermined delay value of 1, the NICs 110A-110C are configured to hold and release the packets for each of the five multicasts at time = 1, 1.1, 1.5, 1.7, and 2.0, respectively.

The predetermined delay value can vary from implementation-to-implementation, for example based on requirements for packet delivery fairness and latency. Higher values of the predetermined delay value can provide a better fairness guarantee, at the cost of increased packet latency. The tradeoff described is not introduced by the system 100, but rather from the need to run applications in a shared environment. As another example, the predetermined delay value can be based on the maximum packet processing delay inside the NICs, plus a cable transmission delay to the receivers. However, as the system is likely to share traffic from other applications, the predetermined delay value may also be determined to account for packet queuing delays.

In these and other examples, the predetermined delay value can be sent on a per-packet basis, *e.g*., as metadata in the packet 115, shared offline, and/or shared as a separate network communication to the NICs 110A-110C, for example on a periodic basis or based on a current workload being executed by the system 100.

The connections 112A-112C are shown as wires and/or network paths, *e.g*., through different links and switches, of varying lengths, although in general any wired or wireless connection can be used for coupling the sender 105 to the NICs 110A-110C. The length of the wire or relative differences in latency in the connections 112A-112C do not need to match or be within a tight threshold, because the NICs 110A-110C hold and releases data packets 115 to ensure that receivers 111A-111C receive packets within a predetermined threshold, *e.g.*, within tens of nanoseconds of one another.

The system 100 includes a clock synchronization engine 130. The clock synchronization engine 130 is configured to send synchronization signals or information to clocks 106A, 116A-116C. The clocks are implemented in hardware, *e.g*., using a crystal oscillator. The clocks 106A, 116A-116C can use any sampling or measurement method for tracking the progression of time using a reliable signal. The clock synchronization engine 130 can use any of a variety of techniques, for example a fault-tolerant clock synchronization system, techniques based on Precision Time Protocol (PTP), etc., for causing the clocks 106A, 116A-116C, to agree on a packet delivery time. Clock synchronization can be based on a centralized paradigm, *e.g*., through the clock synchronization engine 130. In some examples, clock synchronization can be based on a decentralized paradigm, *e.g*., based on consensus between the different clocks 106A, 116A-C.

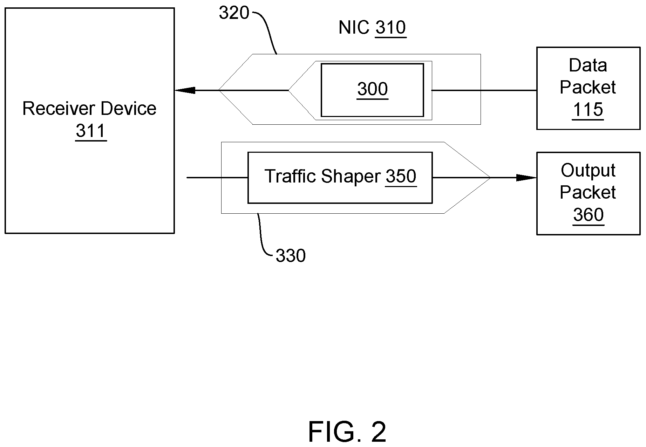

The NICs 110A-110C are configured to receive data packets 115 from the sender 105, over connections 112A-112C, respectively. The NICs 110A-110C can parse or generate the predetermined release time 120 from the data packets 115. The NICs 110A-110C store the data packets 115 in memory, *e.g*., represented as a data structure, such as a timing wheel, queue, list, etc., until the predetermined release time 120 is reached by the hardware clocks 106A-106C. At the predetermined release time 120, the NICs 110A-110C unloads the data packets 115 in memory and delivers the data packets 115 to the receivers 111A-111C. As shown and described with reference to FIGs. 2-5B, the NICs and the receivers can be coupled together in a variety of different ways, consistent with aspects of the disclosure.

Although shown and described by example as NICs 110A-110C, in general, any network device configured to release and communicate data, and having a hardware clock that can be synchronized by the clock synchronization engine 130 can be configured for fair data packet delivery as described herein. Further, although only three NICs 110A-110C are shown, in other examples, different quantities of NICs can be implemented.

Receivers 111A-111C, like the sender 105, can be software, virtual machines, devices, networks of devices, processors, or any other combination of firmware, software, and/or hardware configured to perform the operations described herein. The receivers 111A-111C need not be part of the system 100, for example being operated and maintained by third parties to the devices and platforms forming the system 100. In some examples, the different combinations of the sender 105, the system 100, and/or receivers 110A-110N are operated by the same entity. For example, the sender 105 and the system 100 may be operated by the same entity, the receivers 110A-1 ION may be operated by the same entity as the system 100, or all three of the sender 105, the system 100, and the receivers 110A-110N are operated by the same entity.

The system 100 can be implemented for a variety of different use cases in which fair data packet delivery is needed for multicasting data to be delivered at the same time for all the receivers 111A-C. As an example, the system 100 can be part of a financial exchange system, in which receivers 111A-C are operated or maintained by exchange participants. The sender 105 can be an exchange platform implementing a market engine configured to maintain stock information, process incoming orders, and distribute market data to receivers 111A-C. As many transactions on this system may be governed by a first-come-first-served rule and the objects of these transactions are typically limited, the exchange platform needs to enforce a tight bound, e.g., tens of nanoseconds, on the difference of packet arrival time by each receiver. Other examples can include implementing consensus protocols, online gaming, and augmented reality/virtual reality applications.

FIG. 2 is a block diagram of a NIC 310 with a hold and release engine 300 in an ingress pipeline 320 of the NIC 310, according to aspects of the disclosure. The ingress pipeline 320 represents operations the NIC 310 is configured to perform that are associated with the receipt of data intended for a receiver or the NIC 310 itself. The egress pipeline represents operations the NIC 310 is configured to perform that are associated with the transmission of data from the NIC to a device or network of devices. The NIC 310 can be configured to perform different operations for pacing or rate limiting output packets 360 from the NIC 310, as part of the egress pipeline 330. For example, NIC 310 can implement a traffic shaper engine 350, configured to implement different policies or configurations for rate limiting or pacing packets into the network.

The engine 300 is configured to perform the operations described with reference to FIG. 1 and the NICs 110A-110C. The engine 300 is configured to receive the data packet 115, parse the data packet 115 to determine a predetermined release time, hold the data packet 115 until the predetermined release time is met, and then release the packet to receiver 311. Implementing the hold and release engine 300 in the ingress pipeline 320 allows for reduced delay variance in data packet 115 to a group of receivers. For example, the engine 300 can leverage a hardware clock for the NIC 310, enabling more precise synchronization over software-based clocks. In addition, holding and releasing packets in a NIC receiving data on behalf of a receiver eliminates intermediate network layers that are candidates for introducing network delay. The need for intermediate network layers is also reduced or eliminated by assigning NICs local to the receivers. The delay variance that the NIC 310 contends with is merely any delay variance associated with the physical interconnect, *e.g*., PCIe, between the NIC 310 and the receiver 311.

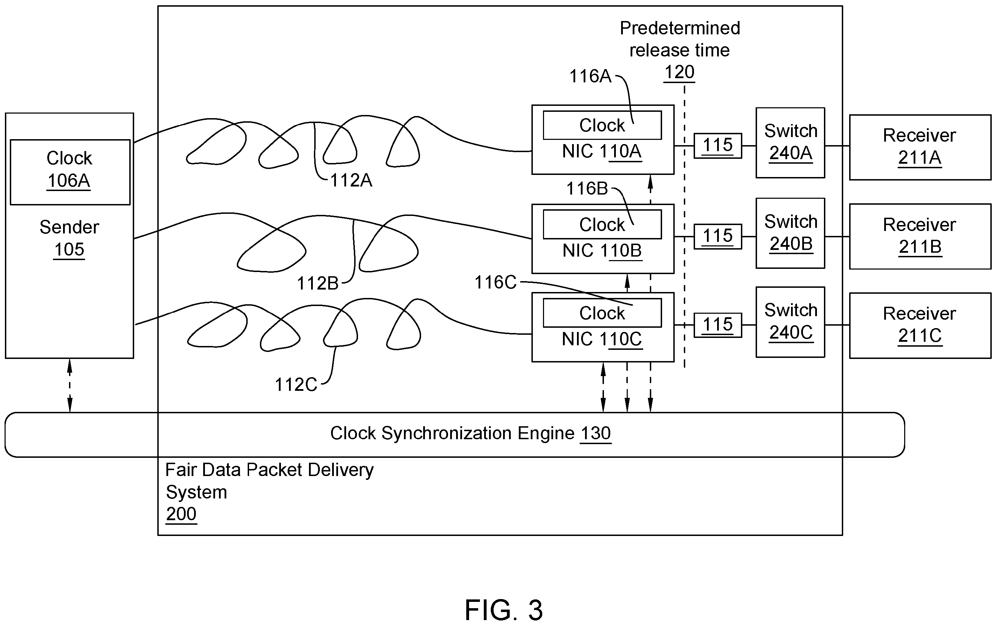

FIG. 3 is a block diagram of a fair data packet delivery system 200 with switches 240A-240C, according to aspects of the disclosure. In some cases, the NIC of a receiver is unable to hold and release packets. For example, entities managing receiver devices may provide or require their own devices may be used on the system 200, but that are not configured for hold and release as described herein.

In these examples, aspects of the disclosure provide for a fair data packet delivery system 200 that provides switches 240A-C coupling the receivers 211A-211C to the NICs 110A-110C. The switches 240A-C can be network access switches, such as top of rack (ToR) switches.

Packets 115 are sent by sender 105 to the NICs 110A-110C. The NICs 110A-110C hold and release packets but release the data packet 115 to a switch of the switches 240A-240C. Although multiple switches are shown, in some examples some or all the NICs 110A-110C and the receivers 211A-211C share a switch. For example, some receivers and NICs may be installed on the same rack with a network access switch for coupling receivers and NICs to one another.

Switches 240A-240C forward the data packets 115 to the receivers 211A-211C. To reduce delay variance, the NICs 110A-110C are connected to the switches 240A-240C by cables of equal length. The switches 240A-240C and the receivers are also connected to cables of equal length. The system 200 still mitigates the requirement that each layer of a fair data packet delivery system be built with equal-length cables to reduce delay variance, by positioning appropriately configured NICs as close as possible to the receivers 211A-211C, in this case using a set of switches. The NICs 1 10A-1 10C become the closest device at which the system 200 can release the packets 115. As a result, aspects of the disclosure can be flexibly implemented for receivers that are not suited or available for directly connecting to a NIC as described with reference to FIGs. 1-2.

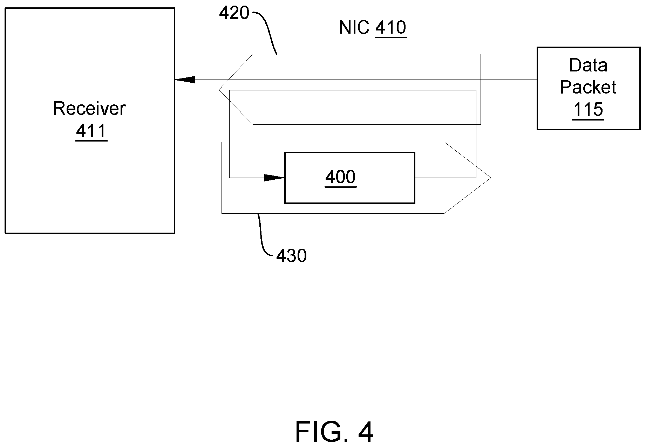

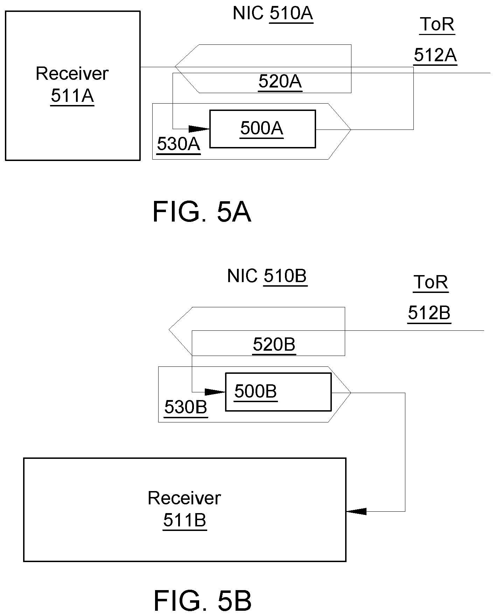

FIG. 4 is a block diagram of a NIC 410 with a hold and release engine 400 in an egress pipeline 430 of the NIC 410, according to aspects of the disclosure. As described herein with reference to FIG. 2, NICs can be configured for holding and releasing packets at an ingress pipeline, using a hold and release engine 400. In some examples, a NIC may not be built to support holding and releasing packets at ingress. As discussed, NICs may implement some packet processing, such as network traffic shaping at an egress pipeline, when packets are being sent out from the NIC. As described with reference to FIG. 4, a loopback can take place locally, e.g., within the NIC 410 itself. FIGs. 5A-5B and their corresponding description provide examples of loopbacks that take place outside of the NIC 410, e.g., over a ToR switch.

Therefore, aspects of the disclosure provide for a hold and release engine 400 configured as part of the egress pipeline of a NIC 410. The NIC 410 receives data packet 115 at ingress pipeline 420 and determines whether the packet is tagged for hold-and-release, e.g., by a sender using a sender-system interface as described with reference to FIG. 1. If the NIC 410 determines that a received packet is tagged for hold and release, or if the NIC 410 is configured to hold-and-release all received packets, the NIC 410 forwards the packet to egress pipeline 430. The NIC 410 at the egress pipeline 430 is configured to perform hold and release of the data packet using a hold and release engine 400. The NIC 410 can be configured to implement the engine 400 using traffic-shaping functionalities, e.g., clock synchronization and packet delaying, or other operations performed on data leaving the NIC 410. The NIC 410 can be configured, for example, using available software or hardware interfaces for programming NIC operations. These interfaces may be available with the NIC 410 for implementing various traffic shaping policies or rate-limiting configurations as part of executing the egress pipeline 430.

After holding and releasing the data packet 115 at the predetermined release time, the NIC 410 loops back the data packet to the ingress pipeline 420. For example, the NIC 410 releases the data packet 115, but instead of sending out the data packet 115 as part of the egress pipeline 430, the NIC 410 is instead configured to forward the data packet 115 back to the the NIC 410, as if the packet 115 was just received. Intercepting the packet, holding and releasing the packet, and then looping the packet back to the ingress pipeline 420 allows aspects of the disclosure to be implemented on NICs that allow for customizing egress pipeline functionality, even if the hold-and-release engine cannot be implemented natively as part of the ingress pipeline. The ingress pipeline 420 may have some degree of delay variance in its input queue when the data packet 115 is looped back, but overall, the NIC 410 provides higher guarantees of fairness over approaches that do not implement hold-and-release with loopback.

The example NIC 410 can be implemented local to the receiver 411, e.g., as part of the same host device and connected over a board, using an interconnect such as PCIe. FIGs. 5A and 5B illustrate examples of hold-and-release with loopback over a switch.

FIG. 5A is a block diagram of a configuration of a NIC 510A for hold-and-release with loopback through a top of rack (ToR) switch 512A and a receiver device 511A, according to aspects of the disclosure. NIC 510A can be on the same host device as receiver device 511A. NIC 510A includes ingress pipeline 520A and egress pipeline 530A in which hold and release engine 500A is implemented. Loopback over the switch 512A may be used, for example because the loopback to the ingress pipeline 520A after egress hold-and-release is not available, *e.g.*, because either the hold and release engine 500A is not configured for loopback, and/or loopback to the ingress pipeline 520A is not available after hold-and-release. Instead, the NIC 510A can perform the loopback through the ToR switch 512A, as described presently.

Although ToR switches 512A and 512B are shown in FIGs. 5A-5B, in some examples, different types of network access switches may be used. The NIC 510A can loopback a packet held and released by the engine 500A to the ingress pipeline 520A, through the ToR switch 512A. The ToR switch 512A sends the data packet to the NIC 510A, which forwards the packet to receiver 511A. Adding the ToR switch 512A to the loopback allows for flexibility in the use of switch features that are not available when loopback is done within the NIC 510A.

FIG. 5B is a block diagram of another configuration of a NIC 510B for hold and release with loopback through a ToR switch 512B and a receiver 511B, according to aspects of the disclosure. NIC 510B includes ingress pipeline 520B and egress pipeline 530B in which hold-and-release engine 500B is implemented. The NIC 510B loops the data packet back to ToR switch 512B, as described with reference to FIG. 5A and ToR switch 512A.

In some examples, hold-and-release through the ingress pipeline 520B of the NIC 510B is available or hold-and-release through egress pipeline 530B with loopback to the ingress pipeline 520B is available, but loopback through the switch 512B is chosen, instead. One reason for choosing this implementation in some examples can be to equalize delay variance between NICs and receivers implemented on the same host device, and NICs and receivers that may not be implemented on the same host device.

As discussed with reference to FIG. 4, some receivers may not be accessible for configuring those receivers with hold and release functionality, according to aspects of the disclosure, and instead are connected to NICs using switches. The NIC 510B loops the held-and-released data packet to ToR switch 512B, which is coupled to receiver 511B.

NICs and receivers can be coupled to the ToR switches 512A and 512B to reduce delay variance potentially introduced after the data packet is released by the NICs 510A and 510B. Queues at the ingress and egress pipelines, as well as queues at the ToR switches may contribute to delay variance, but overall, the NICs 510A and 510B provide higher guarantees of fairness over approaches that do not implement hold and release with loopback.

### Example Methods

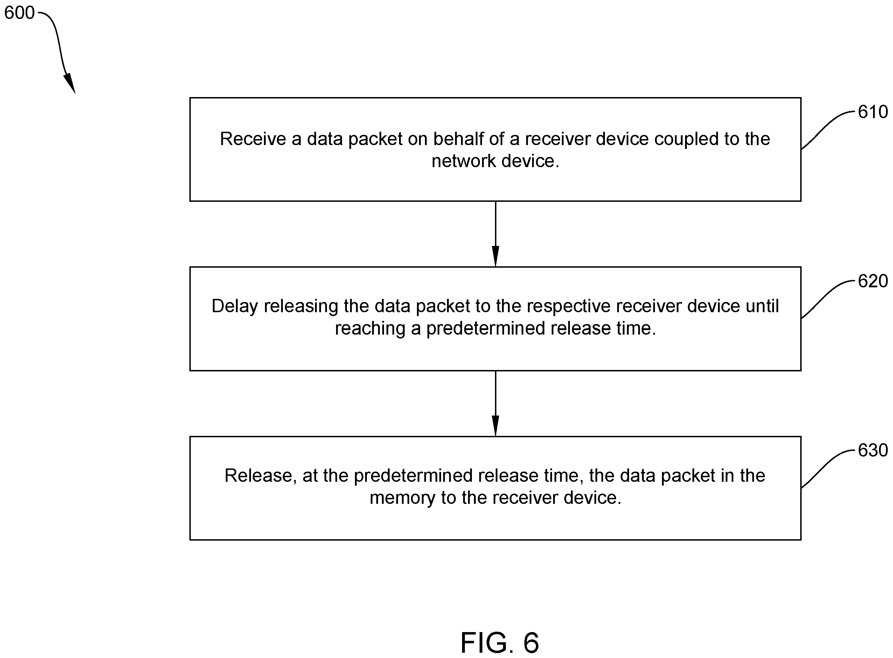

FIG. 6 is a flow diagram of an example process 600 for fair data packet delivery, according to aspects of the disclosure. The example process can be performed on a system including network devices, such as NICs and the fair data packet delivery system 100 of FIG. 1.

A network device receives a data packet on behalf of a receiver device coupled to the network device, according to block 610. For example, a network device receives a data packet on behalf of a receiver device when the data packet is intended for the receiver and is part of a multicast of multiple copies of the data packet. Each receiver device is associated with a network device configured to implement fair packet delivery to the receiver devices using hold-and-release, as described herein.

The network device delays releasing the data packet to the receiver device until reaching a predetermined release time, according to block 620. The data packets received by the network device can be one of multiple data packets multicasted by a sender device. The sender device can be configured to tag the data packet with the predetermined release time, using a sender-system interface. In some examples, the network device is configured to calculate the predetermined release time, based on a predetermined delay value. Example delay values include 1-400 microseconds, although other delay values are possible and at different scales, from example-to-example.

The network device includes a hardware clock. The network device is configured to synchronize the hardware clock with each hardware clock of the plurality of network devices of the system, to release the data packet at the predetermined release time relative to the synchronized hardware clock. The fair data packet delivery system can include a clock synchronization engine or other mechanism to facilitate synchronizing the hardware clocks of each network device. The clock of a sender is also synchronized with the hardware clocks, for example through signals sent by a sender-system interface implemented by the sender. The use of a hardware clock mitigates delay variance introduced in imprecise synchronization, for example as may be the case with the synchronization of clocks in software.

The network device releases, at the predetermined release time, the data packet in the memory to the receiver device, according to block 630. The network device and the receiver device can be deployed on the same host machine, connected over a board implementing a physical interconnect such as PCIe. In some examples, the network devices and receiver devices are coupled by cables of equal length to a network access switch, such as a top of rack switch.

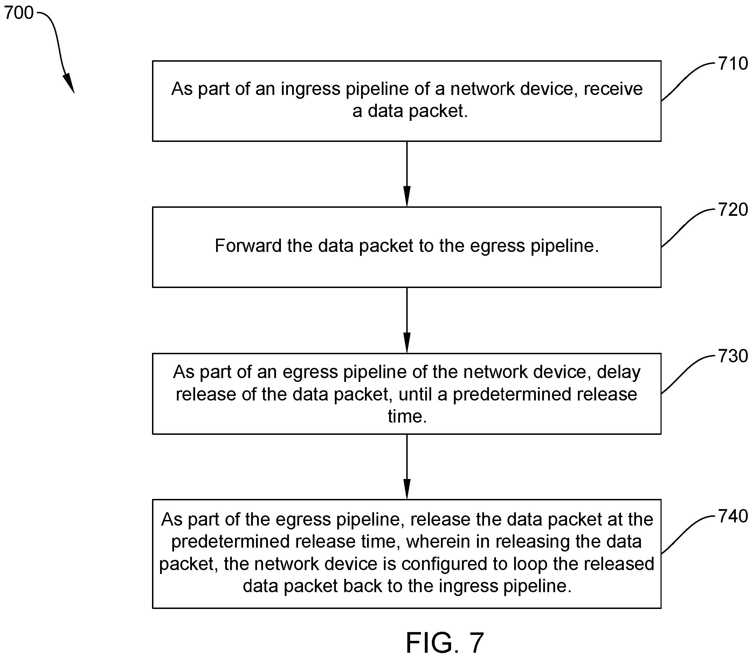

FIG. 7 is a flow diagram of an example process 700 for fair data packet delivery at an egress pipeline for a network device, with loopback, according to aspects of the disclosure. As described with reference to FIGs. 3-5B, a network device can be configured to perform packet hold and release as part of an egress pipeline of operations. The network device, for example a network interface controller with traffic-shaping functionality, can be configured to implement hold and release as part of an egress pipeline, before looping the released packet back to a network device or switch.

As part of an ingress pipeline of a network device, the network device receives a data packet, according to block 710.

The network device forwards the data packet to the egress pipeline, according to block 720. In this context, forwarding to a pipeline can refer to causing the network device to perform one or more operations represented by the egress pipeline.

As part of the egress pipeline, the network device delays release of the data packet until a predetermined release time, according to block 730.

As part of the egress pipeline, the network device releases the data packet at the predetermined release time, according to block 740. As part of releasing the data packet, the network device loops the released packet back to the ingress pipeline. Loopback can be in the network device, e.g., as shown and described with reference to FIG. 5A, or through a switch, e.g., as shown and described with reference to FIG. 5B.

Implementations of the present technology include, but are not restricted to, the following:
(1) A system for fair data packet delivery, including: a plurality of network interface controllers (NICs), each NIC coupled to a respective receiver device, each NIC including respective memory and configured to: receive a data packet on behalf of the respective receiver device coupled to the NIC; delay release of the data packet to the respective receiver device until reaching a predetermined release time, wherein the data packet is loaded in the memory of the NIC while the release is delayed; and release, at the predetermined release time, the data packet in the memory for delivery to the respective receiver device.
(2) The system of (1), wherein each NIC includes a respective hardware clock, and wherein each NIC is further configured to: synchronize the hardware clock with each hardware clock of the plurality of NICs; and wherein in releasing the data packet at the predetermined release time, the NIC is configured to release the data packet when the synchronized hardware clock for the NIC indicates the predetermined release time.
(3) The system of (2), wherein each data packet received by the plurality of NICs is multicast by a sender device configured to tag the data packet with the predetermined release time.
(4) The system any one of (1) - (3), wherein each NIC includes an ingress pipeline and an egress pipeline, and wherein: as part of the ingress pipeline, the NIC is configured to perform operations associated with the receipt of data intended for the respective receiver device coupled to the NIC; and as part of the egress pipeline, perform operations associated with the transmission of data from the respective receiver device.
(5) The system of (4), wherein each NIC is configured to: as part of the ingress pipeline, receive the data packet, delay release of the data packet, and release the data packet at the predetermined release time.
(6) The system of either (4) or (5), wherein each NIC is configured to: as part of the ingress pipeline, receive the data packet; and forward the data packet to the egress pipeline, wherein the NIC is configured to, as part of the egress pipeline: delay release of the data packet until the predetermined release time, and release the data packet at the predetermined release time, wherein in releasing the data packet, the NIC is configured to loop back the released data packet to the ingress pipeline.
(7) The system of (6), wherein each of the NICs and each of the receiver devices are coupled to a switch; and wherein for each NIC, in looping the released data packet back to the ingress pipeline, the NIC is configured to release, through the switch, the released data packet to the respective receiver device for the NIC.
(8) The system of (7), wherein each of the receiver devices are coupled to the switch using cables of equal length.
(9) The system of any one of (4) - (8), wherein operations associated with the transmission of the data from the respective receiver device include operations for traffic shaping the data prior to transmission.
(10) The system of any one of (1) - (9), wherein the predetermined release time is based on a delay of 1-400 microseconds.
(11) A method performed by one or more NICs including one or more processors and one or more memory devices, wherein the memory devices store instructions that are operable, when executed by the one or more processors of the NICs, to perform the operations of any one of (1) - (10).
(12) One or more non-transitory computer-readable storage media, storing instructions that when executed by one or more processors of one or more NICs, causes the one or more processors to perform the operations of any one of (1) - (10).
(13) A network device for fair data packet delivery, including: memory; and one or more processors, wherein the one or more processors are configured to: receive a data packet on behalf of a receiver device coupled to the network device; delay releasing the data packet to the respective receiver device until reaching a predetermined release time, wherein the data packet is loaded in the memory of the NIC while the release is delayed; and release, at the predetermined release time, the data packet in the memory to the receiver device.
(14) The network device of (13), wherein: the network device includes a hardware clock, and wherein the network device is further configured to: synchronize the hardware clock with each hardware clock of a plurality of network devices in receipt of the data packet; and wherein in releasing the data packet at the predetermined release time, the network device is configured to release the data packet when the synchronized hardware clock for the network device indicates the predetermined release time.
(15) The network device of (13) or (14), wherein the data packet is a copy of a data packet multicast to one or more other network devices by a sender device including a clock that is synchronized with the hardware clock of the network device.
(16) The network device of one of (11) - (15), wherein: the network device includes an ingress pipeline and an egress pipeline, and wherein: as part of the ingress pipeline, the network device is configured to perform operations associated with the receipt of data intended for the receiver device; and as part of the egress pipeline, perform operations associated with the transmission of data from the receiver device.
(17) The network device of one of (16), wherein network device is configured to: as part of the ingress pipeline, receive the data packet, delay release of the data packet, and release the data packet at the predetermined release time.
(18) The device of (15), wherein the network device is configured to: as part of the ingress pipeline, receive the data packet; and forward the data packet to the egress pipeline, wherein the network device is configured to, as part of the egress pipeline: delay release of the data packet and release the data packet at the predetermined release time, wherein in releasing the data packet, the NIC is configured to loop back the released data packet to the ingress pipeline.
(19) The network device of (18), wherein the network device and the receiver device are coupled to a switch; and wherein, in looping the released data packet back to the ingress pipeline, the network device is configured to release, through the switch, the released data packet to the receiver device.
(20) The network device of any one of (14)-(19), wherein operations associated with the transmission of the data from the receiver device include operations for traffic shaping the data prior to transmission.
(21) The network device of any one of (11)-(20), wherein the predetermined release time is based on a delay value of 1-400 microseconds.
(22) A method for fair data packet release, the method including: receiving, by a network device including memory and one or more processors, a data packet on behalf of a receiver device coupled to the network device; delaying, by the network device, release of the data packet to the receiver device until reaching a predetermined release time, wherein the data packet is loaded in the memory of the NIC while the release is delayed; and releasing, at the predetermined release time, the data packet in the memory to the receiver device.
(23) The method of (22), further including performing any of the operations in (11)-(21).
(24) One or more non-transitory computer-readable storage media, storing instructions that when executed by a network device including one or more processors, causes the one or more processors to perform the operations of any one of (11) - (23).

### Example Computing Environment

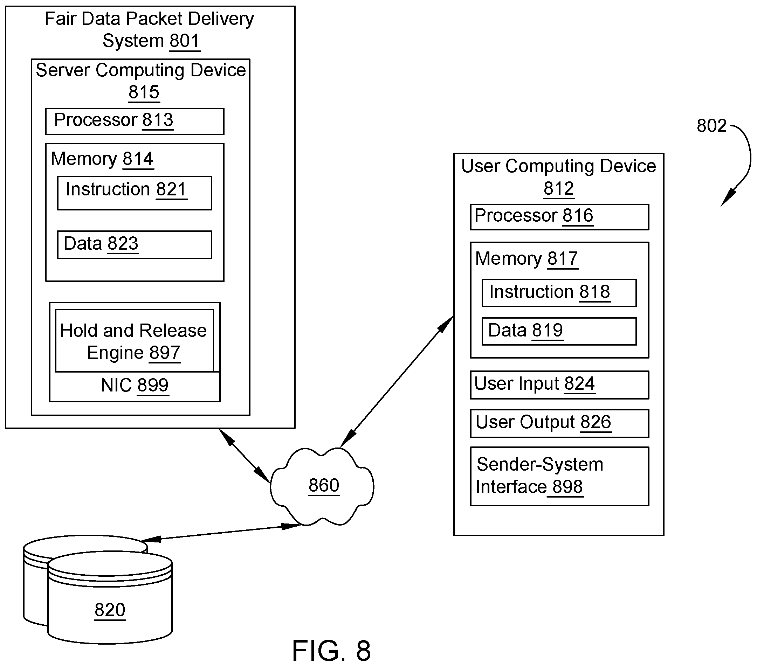

FIG. 8 is a block diagram of an example computing environment 802 configured to implement a fair data packet delivery system 801, according to aspects of the disclosure. The system 801 can be implemented on one or more devices having one or more processors in one or more locations, such as in server computing device 815. User computing device 812 and the server computing device 815 can be communicatively coupled to one or more storage devices 830 over a network 860. Examples of the user computing device 812 can include sender or receiver devices, as shown and described herein. In examples in which the user computing device 812 is a sender, the device 812 can implement sender-system interface 898. Server computing device 815 can include one or more NICs 899, each implementing a hold and release engine 897.

The storage device(s) 830 can be a combination of volatile and non-volatile memory and can be at the same or different physical locations than the computing devices 812, 815. For example, the storage device(s) 830 can include any type of non-transitory computer readable medium capable of storing information, such as a hard-drive, solid state drive, tape drive, optical storage, memory card, ROM, RAM, DVD, CD-ROM, write-capable, and read-only memories.

The server computing device 815 can include one or more processors 813 and memory 814. The memory 814 can store information accessible by the processor(s) 813, including instructions 821 that can be executed by the processor(s) 813. The memory 814 can also include data 823 that can be retrieved, manipulated or stored by the processor(s) 813. The memory 814 can be a type of non-transitory computer readable medium capable of storing information accessible by the processor(s) 813, such as volatile and non-volatile memory. The processor(s) 813 can include one or more central processing units (CPUs), graphic processing units (GPUs), field-programmable gate arrays (FPGAs), and/or application-specific integrated circuits (ASICs), such as tensor processing units (TPUs).

The instructions 821 can include one or more instructions that when executed by the processor(s) 813, causes the one or more processors to perform actions defined by the instructions. The instructions 821 can be stored in object code format for direct processing by the processor(s) 813, or in other formats including interpretable scripts or collections of independent source code modules that are interpreted on demand or compiled in advance. The instructions 821 can include instructions for implementing the system 801 consistent with aspects of this disclosure. The system 801 can be executed using the processor(s) 813, and/or using other processors remotely located from the server computing device 815.

The data 823 can be retrieved, stored, or modified by the processor(s) 813 in accordance with the instructions 821. The data 823 can be stored in computer registers, in a relational or non-relational database as a table having a plurality of different fields and records, or as JSON, YAML, proto, or XML documents. The data 823 can also be formatted in a computer-readable format such as, but not limited to, binary values, ASCII or Unicode. Moreover, the data 823 can include information sufficient to identify relevant information, such as numbers, descriptive text, proprietary codes, pointers, references to data stored in other memories, including other network locations, or information that is used by a function to calculate relevant data.

The user computing device 812 can also be configured similarly to the server computing device 815, with one or more processors 816, memory 817, instructions 818, and data 819. The user computing device 812 can also include a user output 826, and a user input 824. The user input 824 can include any appropriate mechanism or technique for receiving input from a user, such as keyboard, mouse, mechanical actuators, soft actuators, touchscreens, microphones, and sensors. The NIC 899 can also include processors and memory as described with reference to the user computing device 812 and the server computing device 815.

The server computing device 815 can be configured to transmit data to the user computing device 812, and the user computing device 812 can be configured to display at least a portion of the received data on a display implemented as part of the user output 826. The user output 826 can also be used for displaying an interface between the user computing device 812 and the server computing device 815. The user output 826 can alternatively or additionally include one or more speakers, transducers or other audio outputs, a haptic interface or other tactile feedback that provides non-visual and non-audible information to the platform user of the user computing device 812.

Although FIG. 5 illustrates the processors 813, 816 and the memories 814, 817 as being within the computing devices 815, 812, components described in this specification, including the processors 813, 816 and the memories 814, 817 can include multiple processors and memories that can operate in different physical locations and not within the same computing device. For example, some of the instructions 821, 818 and the data 823, 819 can be stored on a removable SD card and others within a read-only computer chip. Some or all the instructions and data can be stored in a location physically remote from, yet still accessible by, the processors 813, 816. Similarly, the processors 813, 816 can include a collection of processors that can perform concurrent and/or sequential operation. The computing devices 815, 812 can each include one or more internal clocks providing timing information, which can be used for time measurement for operations and programs run by the computing devices 815, 812.

The server computing device 815 can be configured to receive requests to process data from the user computing device 812. For example, the environment 802 can be part of a computing platform configured to provide a variety of services to users, through various user interfaces and/or APIs exposing the platform services.

The devices 812, 815 can be capable of direct and indirect communication over the network 860. The devices 815, 812 can set up listening sockets that may accept an initiating connection for sending and receiving information. The network 860 itself can include various configurations and protocols including the Internet, World Wide Web, intranets, virtual private networks, wide area networks, local networks, and private networks using communication protocols proprietary to one or more companies. The network 860 can support a variety of short- and long-range connections. The short- and long-range connections may be made over different bandwidths, such as 2.402 GHz to 2.480 GHz (commonly associated with the Bluetooth^{®} standard), 2.4 GHz and 5 GHz (commonly associated with the Wi-Fi^{®} communication protocol); or with a variety of communication standards, such as the LTE^{®} standard for wireless broadband communication. The network 860, in addition or alternatively, can also support wired connections between the devices 812, 815, including over various types of Ethernet connection.

Although a single server computing device 815, user computing device 812, and datacenter 550 are shown in FIG. 5, it is understood that the aspects of the disclosure can be implemented according to a variety of different configurations and quantities of computing devices, including in paradigms for sequential or parallel processing, or over a distributed network of multiple devices. In some implementations, aspects of the disclosure can be performed on a single device, and any combination thereof.

Aspects of this disclosure can be implemented in digital electronic circuitry, in tangibly-embodied computer software or firmware, and/or in computer hardware, such as the structure disclosed herein, their structural equivalents, or combinations thereof. Aspects of this disclosure can further be implemented as one or more computer programs, such as one or more modules of computer program instructions encoded on a tangible non-transitory computer storage medium for execution by, or to control the operation of, one or more data processing apparatus. The computer storage medium can be a machine-readable storage device, a machine-readable storage substrate, a random or serial access memory device, or combinations thereof. The computer program instructions can be encoded on an artificially generated propagated signal, such as a machine-generated electrical, optical, or electromagnetic signal, that is generated to encode information for transmission to suitable receiver apparatus for execution by a data processing apparatus.

The term "configured" is used herein in connection with systems and computer program components. For a system of one or more computers to be configured to perform particular operations or actions means that the system has installed on it, software, firmware, hardware, or a combination thereof that cause the system to perform the operations or actions. For one or more computer programs to be configured to perform particular operations or actions means that the one or more programs include instructions that, when executed by one or more data processing apparatus, cause the apparatus to perform the operations or actions.

The term "data processing apparatus" refers to data processing hardware and encompasses various apparatus, devices, and machines for processing data, including programmable processors, a computer, or combinations thereof. The data processing apparatus can include special purpose logic circuitry, such as a field programmable gate array (FPGA) or an application specific integrated circuit (ASIC), such as a Tensor Processing Unit (TPU). The data processing apparatus can include code that creates an execution environment for computer programs, such as code that constitutes processor firmware, a protocol stack, a database management system, an operating system, or combinations thereof.

The data processing apparatus can include special-purpose hardware accelerator units for implementing machine learning models to process common and compute-intensive parts of machine learning training or production, such as inference or workloads. Machine learning models can be implemented and deployed using one or more machine learning frameworks, such as static or dynamic computational graph frameworks.

The term "computer program" refers to a program, software, a software application, an app, a module, a software module, a script, or code. The computer program can be written in any form of programming language, including compiled, interpreted, declarative, or procedural languages, or combinations thereof. The computer program can be deployed in any form, including as a standalone program or as a module, component, subroutine, or other unit suitable for use in a computing environment. The computer program can correspond to a file in a file system and can be stored in a portion of a file that holds other programs or data, such as one or more scripts stored in a markup language document, in a single file dedicated to the program in question, or in multiple coordinated files, such as files that store one or more modules, sub programs, or portions of code. The computer program can be executed on one computer or on multiple computers that are located at one site or distributed across multiple sites and interconnected by a data communication network.

The term "database" refers to any collection of data. The data can be unstructured or structured in any manner. The data can be stored on one or more storage devices in one or more locations. For example, an index database can include multiple collections of data, each of which may be organized and accessed differently.

The term "engine" can refer to a system, subsystem, or process that is configured to perform one or more specific functions. The engine can be implemented as one or more software modules or components or can be installed on one or more computers in one or more locations. A particular engine can have one or more computers dedicated thereto, or multiple engines can be installed and running on the same computer or computers.

The processes and logic flows described herein can be performed by one or more computers executing one or more computer programs to perform functions by operating on input data and generating output data. The processes and logic flows can also be performed by special purpose logic circuitry, or by a combination of special purpose logic circuitry and one or more computers.

A computer or special purpose logic circuitry executing the one or more computer programs can include a central processing unit, including general or special purpose microprocessors, for performing or executing instructions and one or more memory devices for storing the instructions and data. The central processing unit can receive instructions and data from the one or more memory devices, such as read only memory, random access memory, or combinations thereof, and can perform or execute the instructions. The computer or special purpose logic circuitry can also include, or be operatively coupled to, one or more storage devices for storing data, such as magnetic, magneto optical disks, or optical disks, for receiving data from or transferring data to. The computer or special purpose logic circuitry can be embedded in another device, such as a mobile phone, a personal digital assistant (PDA), a mobile audio or video player, a game console, a Global Positioning System (GPS), or a portable storage device, e.g., a universal serial bus (USB) flash drive, as examples.

Computer readable media suitable for storing the one or more computer programs can include any form of volatile or non-volatile memory, media, or memory devices. Examples include semiconductor memory devices, e.g., EPROM, EEPROM, or flash memory devices, magnetic disks, e.g., internal hard disks or removable disks, magneto optical disks, CD-ROM disks, DVD-ROM disks, or combinations thereof.

Aspects of the disclosure can be implemented in a computing system that includes a back end component, *e.g.,* as a data server, a middleware component, *e.g.,* an application server, or a front end component, e.g., a client computer having a graphical user interface, a web browser, or an app, or any combination thereof. The components of the system can be interconnected by any form or medium of digital data communication, such as a communication network. Examples of communication networks include a local area network (LAN) and a wide area network (WAN), *e.g.,* the Internet.

The computing system can include clients and servers. A client and server can be remote from each other and interact through a communication network. The relationship of client and server arises by virtue of the computer programs running on the respective computers and having a client-server relationship to each other. For example, a server can transmit data, *e.g.,* an HTML page, to a client device, *e.g.,* for purposes of displaying data to and receiving user input from a user interacting with the client device. Data generated at the client device, *e.g.,* a result of the user interaction, can be received at the server from the client device.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including," and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A system for data packet delivery, comprising:
a plurality of network interface controllers (NICs), each NIC coupled to a respective receiver device, each NIC comprising respective memory and configured to:
receive a data packet on behalf of the respective receiver device coupled to the NIC;
delay release of the data packet to the respective receiver device until reaching a predetermined release time, wherein the data packet is loaded in the memory of the NIC while the release is delayed; and
release, at the predetermined release time, the data packet in the memory for delivery to the respective receiver device.

2. The system of claim 1,
wherein each NIC comprises a respective hardware clock, and
wherein each NIC is further configured to:
synchronize the hardware clock with each hardware clock of the plurality of NICs; and
wherein in releasing the data packet at the predetermined release time, the NIC is configured to release the data packet when the synchronized hardware clock for the NIC indicates the predetermined release time; and
wherein optionally each data packet received by the plurality of NICs is multicasted by a sender device configured to tag the data packet with the predetermined release time.

3. The system of claim 1 or 2,
wherein each NIC comprises an ingress pipeline and an egress pipeline, and wherein:
as part of the ingress pipeline, the NIC is configured to perform operations associated with the receipt of data intended for the respective receiver device coupled to the NIC; and
as part of the egress pipeline, perform operations associated with the transmission of data from the respective receiver device.

4. The system of claim 3, wherein each NIC is configured to:
as part of the ingress pipeline, receive the data packet, delay release of the data packet, and release the data packet at the predetermined release time; and/or
wherein operations associated with the transmission of the data from the respective receiver device comprise operations for traffic shaping the data prior to transmission.

5. The system of claim 3, wherein each NIC is configured to:
as part of the ingress pipeline, receive the data packet; and
forward the data packet to the egress pipeline, wherein the NIC is configured to, as part of the egress pipeline:
delay release of the data packet until the predetermined release time, and
release the data packet at the predetermined release time, wherein in releasing the data packet, the NIC is configured to loop back the released data packet to the ingress pipeline.

6. The system of claim 5,
wherein each of the NICs and each of the receiver devices are coupled to a switch; and
wherein for each NIC, in looping the released data packet back to the ingress pipeline, the NIC is configured to release, through the switch, the released data packet to the respective receiver device for the NIC; and
wherein optionally each of the receiver devices are coupled to the switch using cables of equal length.

7. A network device for data packet delivery, comprising:
memory; and
one or more processors, wherein the one or more processors are configured to:
receive a data packet on behalf of a receiver device coupled to the network device;
delay releasing the data packet to the respective receiver device until reaching a predetermined release time, wherein the data packet is loaded in the memory of the NIC while the release is delayed; and
release, at the predetermined release time, the data packet in the memory to the receiver device.

8. The network device of claim 7, wherein:
the network device comprises a hardware clock, and
wherein the network device is further configured to:
synchronize the hardware clock with each hardware clock of a plurality of network devices in receipt of the data packet; and
wherein in releasing the data packet at the predetermined release time, the network device is configured to release the data packet when the synchronized hardware clock for the network device indicates the predetermined release time; and
wherein optionally the data packet is a copy of a data packet multicast to one or more other network devices by a sender device comprising a clock that is synchronized with the hardware clock of the network device.

9. The network device of claim 7 or 8, wherein:
the network device comprises an ingress pipeline and an egress pipeline, and wherein:
as part of the ingress pipeline, the network device is configured to perform operations associated with the receipt of data intended for the receiver device; and
as part of the egress pipeline, perform operations associated with the transmission of data from the receiver device.

10. The network device of claim 9, wherein the network device is configured to:
as part of the ingress pipeline, receive the data packet, delay release of the data packet, and release the data packet at the predetermined release time.

11. The device of claim 10, wherein the network device is configured to:
as part of the ingress pipeline, receive the data packet; and
forward the data packet to the egress pipeline, wherein the network device is configured to, as part of the egress pipeline:
delay release of the data packet and
release the data packet at the predetermined release time, wherein in releasing the data packet, the NIC is configured to loop back the released data packet to the ingress pipeline.

12. The network device of claim 11,
wherein the network device and the receiver device are coupled to a switch; and
wherein, in looping the released data packet back to the ingress pipeline, the network device is configured to release, through the switch, the released data packet to the receiver device.

13. The network device of one of claims 9 to 12, wherein operations associated with the transmission of the data from the receiver device comprise operations for traffic shaping the data prior to transmission.

14. The system of one of claims 1 to 6 or the network device of one of claims 7 to 13, wherein the predetermined release time is based on a delay value of 1-400 microseconds.

15. A method for fair data packet release, the method comprising:
receiving, by a network device comprising memory and one or more processors, a data packet on behalf of a receiver device coupled to the network device;
delaying, by the network device, release of the data packet to the receiver device until reaching a predetermined release time, wherein the data packet is loaded in the memory of the NIC while the release is delayed; and
releasing, at the predetermined release time, the data packet in the memory to the receiver device.
